# FASCICULE DE BREVET EUROPEEN

(11) **EP 4 321 384 B1**
(45) Date de publication et mention de la délivrance du brevet: **21.05.2025**
(21) Numéro de dépôt: 23183989.5
(22) Date de dépôt: 06.07.2023
(51) Int. Cl.: B60R 9/06

(54) **PORTE-CHARGE D'UN VÉHICULE AUTOMOBILE**
LASTENTRÄGER FÜR EIN KRAFTFAHRZEUG
LOAD CARRIER FOR A MOTOR VEHICLE

(30) Priorité: 10.08.2022 FR 2208219
(43) Date de publication de la demande: 14.02.2024
(73) Titulaire: Renault s.a.s, 92100 Boulogne Billancourt (FR)
(72) Inventeur: GIRAULT, Edouard, 78280 GUYANCOURT (FR); Edouard, Rodolphe, 78280 GUYANCOURT (FR)

(56) Documents cités:
- WO-A1-03/039912
- WO-A1-94/05526
- FR-A1- 2 867 120
- US-B1- 6 334 561

## Description

L'invention concerne un porte-charge muni d'un système de verrouillage à une partie arrière d'un véhicule automobile.

Les véhicules ont une place limitée et il est difficile de transporter des objets encombrants ne pouvant être logés dans le coffre à l'arrière du véhicule, même lorsque les sièges de la banquette arrière sont rabattus. On prévoit en général des dispositifs d'arrimage amovibles, du type barres de toit disposées sur le toit du véhicule ou de type porte-bagages fixé sur le dessus d'une malle arrière.

Il est également fréquent d'équiper l'arrière de véhicules automobiles de porte-charges tels que des porte-vélos ou porte-bagages fixés à un attelage solidaire du véhicule. Ces agencements sont coûteux car ils nécessitent l'installation d'un attelage.

D'autres solutions moins coûteuses existent, telle que celle présentée dans la demande de brevet FR2867120 qui présente un porte-charge muni d'un système de fixation à une partie arrière d'un véhicule. Le porte-charge, de cette demande, comprend un bras longitudinal dont une extrémité est apte à coopérer avec un manchon solidaire d'un élément de structure du véhicule, un levier dont une extrémité est montée à rotation par rapport au bras autour d'un axe transversal porté par l'extrémité du bras, un moyen de rappel agencé entre le levier et le bras, exerçant une force dirigée du bras vers le levier et un moyen de verrouillage du levier lorsqu'il est enclenché dans le manchon. Le moyen de verrouillage se présente sous la forme d'une poignée montée à rotation à l'extrémité libre du levier autour d'un axe transversal. La poignée présente ainsi un débattement relativement grand lors de sa manipulation. Ce système de fixation ne nécessite pas d'attelage pour être fixé au véhicule mais la poignée de verrouillage est relativement volumineuse et s'avère difficile à manipuler pour des personnes ayant de petites mains ou portant des gants épais.

La publication WO03/039912A1 divulgue un porte-charge selon la préambule de la revendication 1.

Il existe un besoin pour un porte-charge muni d'un système de verrouillage facile à monter et à réaliser qui soit peu encombrant et aisé à manipuler.

A cet effet, l'invention propose un porte-charge d'un véhicule automobile comprenant :
- un bras longitudinal dont une extrémité est apte à coopérer avec un manchon solidaire d'un élément de structure du véhicule ;
- un système de verrouillage comprenant :∘
   ∘ un levier dont une extrémité est montée à rotation par rapport au bras autour d'un axe transversal porté par l'extrémité du bras, le levier étant mobile entre une position haute de verrouillage dans laquelle il est écarté du bras et apte à coopérer avec le manchon et une position basse de déverrouillage dans laquelle il est proche du bras ;
   ∘ un ressort agencé entre le levier et le bras, exerçant une force sur le levier ;
- un système de blocage du système de verrouillage, comprenant :
   ∘ une partie fixe montée et bloquée sur le bras,
   ∘ une partie mobile montée à rotation sur la partie fixe, et pourvue d'un doigt de blocage s'étendant en direction du levier,
la partie mobile étant déplaçable en rotation entre :
∘ une position de déblocage dans laquelle le mouvement du levier entre ses positions haute et basse est libre ;
∘ une position de blocage dans laquelle le doigt de blocage s'étend entre le levier en position haute et le bras de manière à bloquer un mouvement du levier de sa position haute vers sa position basse.

Le système de blocage du système de verrouillage, passant de ses positions de blocage à déblocage par pivotement, peut être réalisé de manière relativement compacte tout en étant simple à manipuler.

En particulier, lorsque le porte-charge est monté sur le véhicule et que le levier est en position haute de verrouillage dans laquelle il coopère avec le manchon assurant la fixation du porte charge au véhicule, alors, dans la position de blocage, le doigt de blocage est placé entre le levier et le bras, notamment sous le levier de sorte qu'il peut empêcher tout mouvement du levier lors de la phase de roulage assurant ainsi une fixation résistante.

Le doigt de blocage peut notamment être monté sur la partie mobile à une hauteur suffisante pour que levier en position haute coopère avec le manchon lorsque le porte-charge est monté sur le véhicule. En particulier, le doigt de blocage peut être en contact avec le levier ou non. Dans ce dernier cas, un léger débattement du levier peut être prévu, cependant, il doit être suffisamment faible pour garder la solidarité du levier avec le manchon, autrement dit pour maintenir la coopération entre le levier et le manchon.

Avantageusement, le porte-charge peut comprendre des moyens de blocage en rotation de la partie mobile par rapport à la partie fixe lorsque la partie mobile est dans la position de blocage.

Ces moyens de blocage permettent d'empêcher la partie mobile du système de blocage de tourner, par exemple sous l'effet de vibrations ou de brusques secousses lors de la phase de roulage, et par conséquent de débloquer le système de verrouillage.

Dans un mode de réalisation, les moyens de blocage en rotation peuvent comprendre :
- un premier élément de fixation solidaire de la partie mobile,
- un deuxième élément de fixation solidaire d'une extrémité libre du levier ou de la partie fixe, les premier et deuxième éléments de fixation étant situés à proximité l'un de l'autre lorsque la partie mobile est dans la position de blocage,
- un troisième élément de fixation de la partie mobile au levier ou à la partie fixe apte à solidariser les premier et deuxième éléments de fixation lorsque la partie mobile est en position de blocage.

Avantageusement, le premier et le deuxième élément de fixation peuvent être choisis parmi un anneau, un orifice ou une languette munie d'un orifice ou d'un anneau et le troisième élément de fixation peut être choisi parmi un cadenas, un antivol ou une goupille. Le troisième élément peut alors être inséré ou traverser l'anneau ou les orifices des premier et deuxième éléments de fixation pour les assembler et/ou bloquer tout mouvement de rotation de la partie mobile.

Dans un autre mode de réalisation, les moyens de blocage en rotation peuvent comprendre :
- un premier élément d'encliquetage solidaire de la partie mobile,
- un deuxième élément d'encliquetage solidaire d'une extrémité libre du levier ou de la partie fixe, les premier et deuxième éléments d'encliquetage étant encliquetés lorsque la partie mobile est dans la position de blocage.

Un blocage en rotation de la partie mobile peut ainsi être réalisé de manière très simple. Ces premier et deuxième éléments d'encliquetage sont par exemple des éléments mâle-femelle aptes à coopérer. Pour une réalisation plus simple, le deuxième élément d'encliquetage peut notamment appartenir au levier.

Avantageusement, pour une réalisation simple, le deuxième élément de fixation ou le deuxième élément d'encliquetage peut appartenir au levier.

Avantageusement, une extrémité libre du levier peut comprendre une languette formant butée s'étendant le long du doigt de blocage, contre ou à proximité immédiate de celui-ci, lorsque la partie mobile est en position de blocage.

La languette formant une butée permet de positionner correctement le système de blocage dans la position de blocage. Notamment, cette languette peut bloquer une rotation de la partie mobile dans la direction de la languette, cette dernière étant en appui contre le doigt de blocage ou un support de ce dernier.

Avantageusement, la partie mobile peut être en forme de bague pour une réalisation compacte. Notamment, pour une réalisation particulièrement compacte, le rayon de la bague peut être égal ou sensiblement égal, ou inférieur, à la distance séparant l'extrémité libre du levier du bras dans la position haute du levier.

Avantageusement, la périphérie de la partie mobile peut comprendre plusieurs empreintes pour une meilleure prise en main.

L'invention concerne également un véhicule automobile comprenant le porte-charge décrit ci-dessus et un manchon solidaire d'un élément de la structure du véhicule, le levier étant inséré à l'intérieur du manchon et en prise avec celui-ci en position haute.

D'autres particularités et avantages de l'invention ressortiront à la lecture de la description faite ci-après de plusieurs modes de réalisation particuliers de l'invention, donnés à titre indicatif mais non limitatifs, en référence aux dessins annexés sur lesquels :
[Fig. 1] est une vue en perspective du porte charge selon l'invention et d'un manchon destiné à être solidarisé à un élément de la structure du véhicule.
[Fig. 2] est une vue en perspective d'un bras et d'un levier d'un porte charge selon un mode de réalisation de l'invention.
[Fig. 3] est une vue en perspective du système de blocage selon l'invention.
[Fig. 4] est une vue en coupe selon un axe Y du système de blocage et du levier en position basse.
[Fig. 5] est une vue en coupe selon un X du porte charge et du manchon solidaire d'un élément de la structure du véhicule selon l'invention.
[Fig. 6] est une vue en coupe selon un axe Y du système de blocage en position de blocage et du levier en position basse.

Sur les figures, le porte charge est dans une position d'utilisation dans laquelle Z désigne une direction verticale, dirigée de bas vers le haut, Y une direction longitudinale, perpendiculaire à la direction verticale, et X une direction transversale, perpendiculaire et dans le même plan que la direction horizontale. Cette position d'utilisation correspond à une position dans laquelle le porte charge est monté sur le véhicule et le véhicule repose horizontalement sur le sol.

L'invention concerne un porte-charge 1 d'un véhicule automobile pouvant être solidarisé à un élément 2 de structure de véhicule. Le porte-charge 1 peut être installé à l'avant ou à l'arrière du véhicule, l'élément 2 de la structure étant légèrement modifié pour l'accueillir. Préférentiellement, le porte-charge 1 est installé à l'arrière du véhicule. Il est alors par exemple fixé à la portière du coffre du véhicule automobile ou au châssis du véhicule, dans la zone sous le coffre.

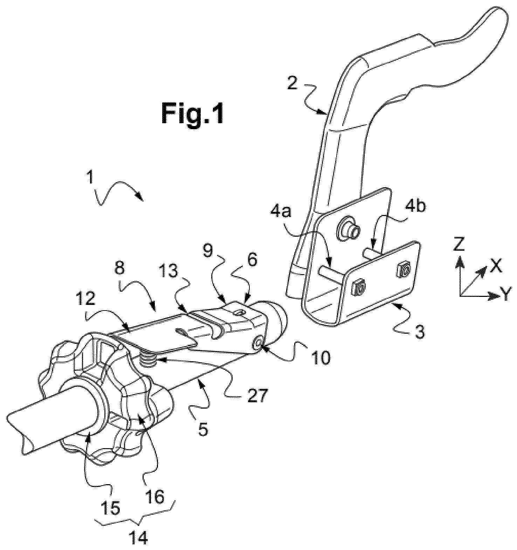

En référence à la figure 1, un manchon 3 solidaire de l'élément 2 de structure de véhicule est utilisé pour fixer le porte-charge 1 au véhicule. Le manchon 3 s'étend généralement longitudinalement selon l'axe X et comprend un logement destiné à recevoir un bras du porte charge suivant sa direction longitudinale (ici la direction X). Dans l'exemple représenté, ce logement est défini par une plaque repliée en U. Le manchon comprend en outre deux tiges 4a, 4b agencées transversalement et sous lesquelles le bras du porte-charge 1 sera inséré tel que décrit plus bas. Ce manchon peut présenter différentes configurations en fonction du véhicule et en fonction du porte-charge à installer.

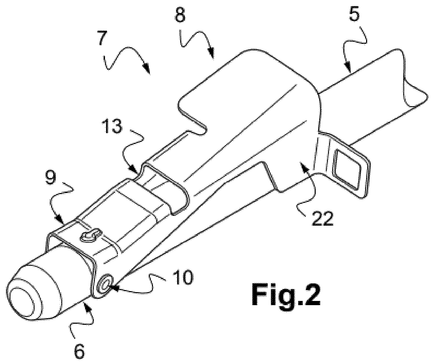

Le porte-charge 1 comprend, en référence à la figure 2, un bras 5 généralement longitudinal dont seule une partie est représentée. Le bras 5 peut présenter une section ronde, ovale, carrée ou de toute autre forme. Préférentiellement, le bras est de forme tubulaire tel que représenté sur les figures. Le porte-charge 1 selon l'invention peut présenter un ou deux bras 5, de préférence deux bras longitudinaux auxquels sont habituellement fixés un ou plusieurs éléments (non représentés) permettant au porte-charge de supporter une charge. Chaque bras 5 est alors fixé au véhicule par un système de verrouillage similaire. Le porte-charge 1 peut alors présenter une symétrie générale par rapport à un plan longitudinal médian.

Une extrémité libre 6 du bras 5 est apte à coopérer avec le manchon 3 solidaire de l'élément 2 de structure du véhicule. A cet effet, ses dimensions permettent son insertion à l'intérieur du logement du manchon, sous les tiges 4a et 4b de ce dernier.

Pour coopérer avec le manchon, le porte-charge 1 comprend un système de verrouillage 7 installé au niveau de l'extrémité 6 du bras 5 longitudinal.

Le système de verrouillage 7 comprend un levier 8 dont une extrémité 9 est montée à rotation par rapport au bras 5 autour d'un axe transversal 10 porté par l'extrémité 6 dudit bras 5. Le système de verrouillage comprend également un ressort hélicoïdal 27, agencé entre le levier et le bras, notamment entre une partie sensiblement centrale, selon l'axe longitudinal Y, du levier 8 et le bras 5 et exerçant une force sur le levier 8. Ce ressort est configuré pour exercer une force sensiblement perpendiculairement à la direction longitudinale du bras, ici selon l'axe Z, tendant à éloigner le levier 8 du bras 5.

Le levier 8 comprend une face supérieure 12 présentant une encoche 13 qui va recevoir la tige 4a du manchon 3 lors du verrouillage du porte charge 1.

Le levier 8 est ainsi mobile entre une position haute de verrouillage dans laquelle il est écarté du bras 5 et apte à coopérer avec le manchon 3 et une position basse de déverrouillage dans laquelle il est proche du bras 5. En position haute, l'encoche 13 reçoit la tige 4a.

Pour maintenir le système de verrouillage en position haute lorsqu'il est solidarisé au manchon, le porte-charge 1, selon l'invention, comprend un système de blocage 14 du système de verrouillage.

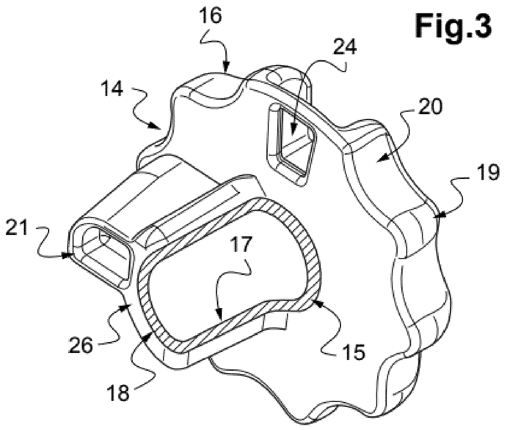

En référence à la figure 3, le système de blocage 14 comprend une partie fixe 15 montée sur le bras 5 et une partie mobile 16 montée à rotation sur la partie fixe 15.

La partie fixe 15, représentée partiellement figure 3, est montée en ajustement sur le bras 5 et entoure entièrement celui-ci. Elle est serrée et bloquée sur le bras, par exemple par une goupille. La partie fixe 15 comprend une paroi interne 17 en contact avec le bras et entourant entièrement celui-ci et une paroi externe 18 en contact avec la partie mobile 16. La paroi interne 17 de la partie fixe 15 présente une forme complémentaire à la forme du bras. Ainsi, si le bras 5 présente une section carrée, alors la paroi interne qui l'entoure présentera également une section carrée. Sur les figures, le bras 5 est de forme tubulaire cylindrique ainsi et la paroi interne 17 sera également de forme cylindrique. La paroi externe 18, quant à elle, prend une forme cylindrique pour que la partie mobile puisse être montée à rotation dessus. La partie mobile 16 est ici en forme de bague et elle est montée à rotation sur la partie fixe 15. La périphérie 19 de la partie mobile peut comprendre plusieurs empreintes 20 pour permettre une meilleure prise en main de la partie mobile 16 par l'utilisateur.

La partie mobile 16 est pourvue d'un doigt de blocage 21 s'étendant en direction du levier, selon la direction longitudinale du bras. Le doigt de blocage 21 a pour fonction de bloquer le levier 8 en position haute en l'empêchant de se rapprocher du bras 5 lors des vibrations ou secousses lors des phases de roulage. La partie mobile 16 est déplaçable en rotation entre une position de déblocage dans laquelle le mouvement du levier 8 entre ses positions haute et basse est libre, le doigt de blocage ne s'étendant pas entre le levier et le bras, et une position de blocage dans laquelle le doigt de blocage 21 s'étend entre le levier 8 en position haute et le bras de manière à bloquer un mouvement du levier 8 de sa position haute vers sa position basse. Ainsi, le doigt de blocage 21 doit être suffisamment proche du levier dans la position de blocage pour empêcher le levier 8 de bouger ou empêcher un débattement du levier qui permettrait à la tige 4a de sortir de l'encoche 13. On pourra notamment prévoir que le doigt de verrouillage 21 ne s'appuie pas directement sur le levier 8, mais qu'un jeu soit prévu pour éviter que le doigt 21 butte contre le levier 8 lorsqu'il est déplacé en position de blocage. Cependant, le jeu doit être inférieur à la profondeur de l'encoche 13 pour éviter que la tige 4a se détache de l'encoche 13 lors d'un mouvement brusque du véhicule et ainsi éviter de déverrouiller le porte charge 1 du manchon 3.

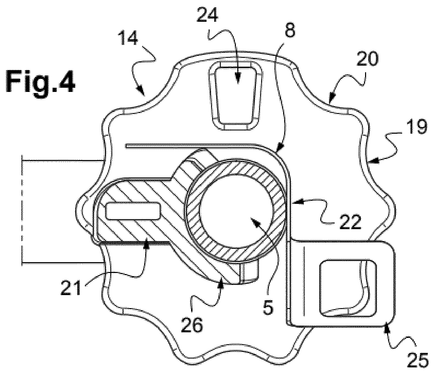

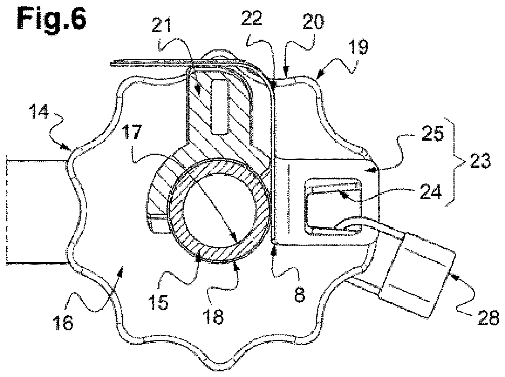

Dans l'exemple représenté, le doigt de blocage 21 est également relié au bras 5 par un support 26 pivotant autour du bras et qui s'étend ici sur toute la longueur du doigt de blocage mesurée selon la direction longitudinale du bras. Le support 26 du doigt de blocage 21 présente une forme cylindrique qui ne s'étend pas sur toute la périphérie du bras 5, mais sur la moitié de la périphérie, voire moins. Comme on peut le voir sur la figure 4, le support 26 est configuré de sorte que lorsque la partie mobile est dans une position de déverrouillage, le support ne s'étend pas, ou très peu entre le levier et le bras. La figure 6 montre que, lorsque la partie mobile est dans la position de verrouillage, un bord 26a de ce support 26 est en butée contre le levier. Ce support 26 permet ainsi d'une part de bloquer le doigt 21 en position de blocage pour faciliter son montage en position de blocage et d'autre part d'éviter que le mouvement du levier 8 de la position haute à la position basse ne soit limité par le support 26 comme représenté sur la figure 4.

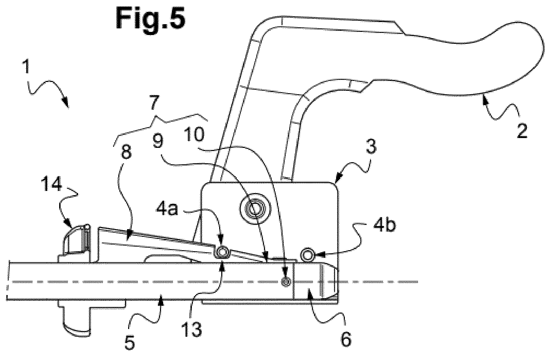

Concernant le montage du porte-charge 1 sur le véhicule, pour commencer, en référence à la figure 1, le porte charge 1 est approché du manchon 3. Le bras 5 du porte charge 1 est alors inséré à l'intérieur du logement du manchon 3. Lors de l'insertion du bras 5, le levier 8 est déplacé vers sa position basse de déverrouillage par les tiges 4a, 4b à l'encontre de la force exercée par le ressort 27. La partie mobile doit alors être dans la position de déblocage représentée figure 4 afin de ne pas gêner le mouvement du levier 8. Le bras 5 et le levier 8 sont alors insérés dans le manchon 3 jusqu'à ce que la tige 4a se loge dans l'encoche 13, le levier 8 remontant alors vers la position haute de verrouillage sous l'action du ressort 27 tel que représenté figure 5. L'utilisateur connaîtra le bon placement du bras 5 lorsqu'il entendra un son tel qu'un clic lorsque que la tige 4a pénètre dans l'encoche 13 et y est maintenue par la force exercée par le ressort. L'extrémité 6 du bras 5 est alors placée sous la tige 4b, assurant ainsi un maintien horizontal du bras 5 à l'intérieur du manchon 3 sans risque de basculement. Dans cette position, le levier 8 en position haute est ainsi solidaire du manchon.

Ensuite, l'utilisateur peut déplacer la partie mobile 16 du système de blocage 14 pour que le doigt de blocage 21 soit placé en position de blocage, tel que représenté figure 6.

Dans un mode de réalisation, une extrémité libre du levier située à côté du système de blocage 14 comprend une languette 22 formant butée s'étendant le long du doigt de blocage 21, contre ou à proximité immédiate de celui-ci, lorsque la partie mobile 16 est en position de blocage pour faciliter le positionnement du système de blocage 21 entre les deux positions. Cette languette 22 s'étend ici sensiblement perpendiculairement à la surface supérieure du levier 12, en direction du bras et jusqu'à hauteur de celui-ci. En particulier, tel que représenté, la languette est en contact avec le bras dans la position basse du levier. Lorsque le support 26 décrit plus haut est présent, la partie mobile 16 peut alors être pivotée de sa position de déblocage vers sa position de blocage jusqu'à ce que le bord 26a du support 26 soit en butée contre la languette 22. Le doigt de verrouillage est alors correctement positionné entre le bras et le levier.

Pour démonter le porte-charge 1, l'utilisateur pourra commencer par déplacer la partie mobile 16 du système de blocage 14 pour placer le doigt 21 en position de déblocage (fig. 4). Ensuite, pour désolidariser le porte-charge 1 du manchon 3, l'utilisateur pourra exercer une pression sur le levier 8 pour le déplacer en position basse et dégager la tige 4a de l'encoche 13. L'utilisateur peut ensuite exercer une traction sur le bras 5 et le levier 8 pour les extraire du manchon 3.

Enfin, le porte-charge 1 peut comprendre des moyens de blocage 23 en rotation de la partie mobile 16 par rapport à la partie fixe 15 lorsque la partie mobile est dans la position de blocage, ceci afin d'éviter tout mouvement de la partie mobile vers sa position de déblocage lors du roulement du véhicule, notamment sous l'effet des vibrations ou de brusques secousses lors de la phase de roulage.

Dans l'exemple représenté, les moyens de blocage 23 en rotation comprennent un premier élément de fixation 24 solidaire de la partie mobile 16, un deuxième élément de fixation 25 solidaire ici d'une extrémité libre du levier 8 le premier 24 et deuxième 25 éléments de fixation étant situés à proximité l'un de l'autre lorsque la partie mobile est dans la position de blocage, tel que représenté figure 6. Dans l'exemple représenté, le premier élément de fixation est un orifice 24 réalisé au travers de la partie mobile et le deuxième élément de fixation est une languette 25 percée d'un orifice. Cette languette percée 25 est solidaire du levier, ici solidaire de la languette 22 servant de butée, et s'étend perpendiculairement à la direction longitudinale du bras, en regard de l'orifice 24 de la partie mobile lorsque cette dernière est en position de blocage (fig. 6).

Dans l'exemple représenté, les moyens de blocage 23 comprennent également un troisième élément de fixation 28, de la partie mobile 16 au levier 8 apte à solidariser les premier 24 et deuxième 25 éléments de fixation lorsque la partie mobile 16 est en position de blocage. Le troisième élément de fixation 28 peut être choisi parmi un cadenas, un antivol ou une goupille ou tout autre élément permettant de solidariser les premier 24 et deuxième 25 éléments de fixation ou permettant de bloquer la rotation de la partie mobile 16 par rapport au bras 5. L'invention n'est toutefois pas limitée à ce mode de réalisation et les premier et deuxièmes éléments de fixation pourraient indifféremment comprendre un anneau ou une languette munie d'un orifice ou d'un anneau. Le deuxième éléments de fixation pourrait également être solidaire de la partie fixe.

Dans un autre mode de réalisation, non représenté sur les figures, les moyens de blocage 23 en rotation peuvent comprendre un premier élément d'encliquetage solidaire de la partie mobile, un deuxième élément d'encliquetage solidaire d'une extrémité libre du levier 8 ou de la partie fixe 15, les premier et deuxième éléments d'encliquetage étant encliquetés lorsque la partie mobile 16 est dans la position de blocage. Les premier et deuxième élément d'encliquetage sont par exemple des éléments complémentaires mâle, femelle aptes à coopérer. Il peut s'agit d'une languette coopérant avec une fente ou gorge ou encore d'un doigt coopérant avec un orifice, etc. Ils peuvent être configurés pour coopérer soit suivant la direction longitudinale du bras, soit perpendiculairement à cette direction.

## Revendications

1. Porte-charge (1) d'un véhicule automobile comprenant :
- un bras (5) longitudinal dont une extrémité est apte à coopérer avec un manchon (3) solidaire d'un élément de structure (2) du véhicule ;
- un système de verrouillage (7) comprenant :
∘ un levier (8) dont une extrémité est montée à rotation par rapport au bras (5) autour d'un axe transversal porté par l'extrémité (6) du bras (5), le levier (8) étant mobile entre une position haute de verrouillage dans laquelle il est écarté du bras (5) et apte à coopérer avec le manchon (3) et une position basse de déverrouillage dans laquelle il est proche du bras (5);
∘ un ressort (27) agencé entre le levier (8) et le bras (5), exerçant une force sur le levier (8) ;
- un système de blocage (14) du système de verrouillage, **caractérisé en ce que** le système de blocage (14) comprend :
∘ une partie fixe (15) montée et bloquée sur le bras (5),
∘ une partie mobile (16) montée à rotation sur la partie fixe (15), et pourvue d'un doigt de blocage (21) s'étendant en direction du levier (8),
la partie mobile (16) étant déplaçable en rotation entre :
∘ une position de déblocage dans laquelle le mouvement du levier (8) entre ses positions haute et basse est libre ;
∘ une position de blocage dans laquelle le doigt de blocage (21) s'étend entre le levier (8) en position haute et le bras (5) de manière à bloquer un mouvement du levier (8) de sa position haute vers sa position basse.

2. Porte-charge (1) selon la revendication 1, **caractérisé en ce qu'**il comprend des moyens de blocage (23) en rotation de la partie mobile (16) par rapport à la partie fixe (15) lorsque la partie mobile (16) est dans la position de blocage.

3. Porte-charge (1) selon la revendication 2, **caractérisé en ce que** les moyens de blocage (23) en rotation comprennent :
- un premier élément de fixation (24) solidaire de la partie mobile (16),
- un deuxième élément de fixation (25) solidaire d'une extrémité libre du levier (8) ou de la partie fixe (15), les premier (24) et deuxième (25) éléments de fixation étant situés à proximité l'un de l'autre lorsque la partie mobile (16) est dans la position de blocage,
- un troisième élément de fixation de la partie mobile (16) au levier (8) ou à la partie fixe (15) apte à solidariser les premier (24) et deuxième (25) éléments de fixation lorsque la partie mobile (16) est en position de blocage.

4. Porte-charge (1) selon la revendication 3, **caractérisé en ce que** le premier (24) et le deuxième (25) élément de fixation sont choisis parmi un anneau, un orifice ou une languette munie d'un orifice ou d'un anneau et **en ce que** le troisième élément de fixation est choisi parmi un cadenas, un antivol ou une goupille.

5. Porte-charge (1) selon la revendication 2, **caractérisé en ce que** les moyens de blocage (23) en rotation comprennent :
- un premier élément d'encliquetage solidaire de la partie mobile (16),
- un deuxième élément d'encliquetage solidaire d'une extrémité libre du levier (8) ou de la partie fixe (15), les premier et deuxième éléments d'encliquetage étant encliquetés lorsque la partie mobile (16) est dans la position de blocage.

6. Porte-charge (1) selon l'une quelconque des revendications 3 à 5, **caractérisé en ce que** le deuxième élément de fixation (25) ou le deuxième élément d'encliquetage appartient au levier (8).

7. Porte-charge (1) selon l'une quelconque des revendications 1 à 6, **caractérisé en ce qu'**une extrémité libre du levier (8) comprend une languette (22) formant butée s'étendant le long du doigt de blocage (21), contre ou à proximité immédiate de celui-ci, lorsque la partie mobile (16) est en position de blocage.

8. Porte-charge (1) selon l'une quelconque des revendications 1 à 7, **caractérisé en ce que** la partie mobile (16) est en forme de bague.

9. Porte-charge (1) selon l'une quelconque des revendications 1 à 8, **caractérisé en ce que** la périphérie (19)de la partie mobile comprend plusieurs empreintes (20) pour une meilleure prise en main.

10. Véhicule automobile comprenant le porte charge (1) selon l'une quelconque des revendications précédentes et un manchon (3) solidaire d'un élément (2) de la structure du véhicule, le levier (8)étant inséré à l'intérieur du manchon (3) et en prise avec celui-ci en position haute.

## Patentansprüche

1. Lastenträger (1) für ein Kraftfahrzeug, umfassend:
- einen Längsarm (5), von dem ein Ende geeignet ist, mit einer Muffe (3) zusammenzuwirken, die mit einem Strukturelement (2) des Fahrzeugs fest verbunden ist;
- ein Verriegelungssystem (7), umfassend:
∘ einen Hebel (8), von dem ein Ende in Bezug auf den Arm (5) um eine von dem Ende (6) des Arms (5) getragene Querachse drehbar montiert ist, wobei der Hebel (8) zwischen einer oberen Verriegelungsstellung, in der er von dem Arm (5) beabstandet ist und geeignet ist, mit der Muffe (3) zusammenzuwirken, und einer unteren Entriegelungsstellung, in der er dem Arm (5) nahe ist, beweglich ist;
∘ eine Feder (27), die zwischen dem Hebel (8) und dem Arm (5) angeordnet ist und eine Kraft auf den Hebel (8) ausübt;
- ein Blockiersystem (14) des Verriegelungssystems, **dadurch gekennzeichnet, dass** das Blockiersystem (14) umfasst:
∘ einen feststehenden Teil (15), der an dem Arm (5) montiert und blockiert ist,
∘ einen beweglichen Teil (16), der an dem feststehenden Teil (15) drehbar montiert ist und mit einem Blockierfinger (21) versehen ist, der sich in Richtung des Hebels (8) erstreckt,
wobei der bewegliche Teil (16) drehend verlagerbar ist zwischen:
∘ einer Deblockierstellung, in der die Bewegung des Hebels (8) zwischen seinen oberen und unteren Stellungen frei ist;
∘ einer Blockierstellung, in der sich der Blockierfinger (21) zwischen dem Hebel (8) in der oberen Stellung und dem Arm (5) erstreckt, so dass eine Bewegung des Hebels (8) aus seiner oberen Stellung in seine untere Stellung blockiert wird.

2. Lastenträger (1) nach Anspruch 1, **dadurch gekennzeichnet, dass** er Drehblockiermittel (23) zum Drehblockieren des beweglichen Teils (16) in Bezug auf den feststehenden Teil (15) umfasst, wenn der bewegliche Teil (16) in der Blockierstellung ist.

3. Lastenträger (1) nach Anspruch 2, **dadurch gekennzeichnet, dass** die Drehblockiermittel (23) umfassen:
- ein erstes Feststellelement (24), das mit dem beweglichen Teil (16) fest verbunden ist,
- ein zweites Feststellelement (25), das mit einem freien Ende des Hebels (8) oder des feststehenden Teils (15) fest verbunden ist, wobei die ersten (24) und zweiten (25) Feststellelemente in der Nähe zueinander gelegen sind, wenn der bewegliche Teil (16) in der Blockierstellung ist,
- ein drittes Feststellelement zum Feststellen des beweglichen Teils (16) an dem Hebel (8) oder an dem feststehenden Teil (15), das geeignet ist, die ersten (24) und zweiten (25) Feststellelemente fest zu verbinden, wenn der bewegliche Teil (16) in der Blockierstellung ist.

4. Lastenträger (1) nach Anspruch 3, **dadurch gekennzeichnet, dass** das erste (24) und das zweite (25) Feststellelement unter einem Ring, einer Öffnung oder einer mit einer Öffnung oder einem Ring versehenen Lasche gewählt sind und dass das dritte Feststellelement unter einem Vorhängeschloss, einer Diebstahlsicherung oder einem Splint gewählt ist.

5. Lastenträger (1) nach Anspruch 2, **dadurch gekennzeichnet, dass** die Drehblockiermittel (23) umfassen:
- ein erstes Rastelement, das mit dem beweglichen Teil (16) fest verbunden ist,
- ein zweites Rastelement, das mit einem freien Ende des Hebels (8) oder dem feststehenden Teil (15) fest verbunden ist, wobei die ersten und zweiten Rastelemente verrastet sind, wenn der bewegliche Teil (16) in der Blockierstellung ist.

6. Lastenträger (1) nach einem der Ansprüche 3 bis 5, **dadurch gekennzeichnet, dass** das zweite Feststellelement (25) oder das zweite Rastelement zu dem Hebel (8) gehört.

7. Lastenträger (1) nach einem der Ansprüche 1 bis 6, **dadurch gekennzeichnet, dass** ein freies Ende des Hebels (8) eine Lasche (22), die einen Anschlag bildet, umfasst, die sich entlang des Blockierfingers (21) erstreckt, gegen diesen oder in unmittelbar Nähe von diesem, wenn der bewegliche Teil (16) in der Blockierstellung ist.

8. Lastenträger (1) nach einem der Ansprüche 1 bis 7, **dadurch gekennzeichnet, dass** der bewegliche Teil (16) in Form eines Rings vorliegt.

9. Lastenträger (1) nach einem der Ansprüche 1 bis 8, **dadurch gekennzeichnet, dass** der Umfang (19) des beweglichen Teils mehrere Vertiefungen (20) zu einem besseren Ergreifen umfasst.

10. Kraftfahrzeug, das einen Lastenträger (1) nach einem der vorhergehenden Ansprüche und eine Muffe (3), die mit einem Element (2) der Struktur des Fahrzeugs fest verbunden ist, umfasst, wobei der Hebel (8) in das Innere der Muffe (3) eingeführt ist und in der oberen Stellung mit dieser in Eingriff ist.

## Claims

1. Motor vehicle load carrier (1) comprising:
- a longitudinal arm (5), one end of which can interact with a sleeve (3) secured to a structural element (2) of the vehicle;
- a locking system (7) comprising:
∘ a lever (8), one end of which is mounted so as to rotate with respect to the arm (5) about a transverse pin borne by the end (6) of the arm (5), the lever (8) being able to move between an upper locking position in which it is spaced apart from the arm (5) and can interact with the sleeve (3) and a lower unlocking position in which it is close to the arm (5);
∘ a spring (27) arranged between the lever (8) and the arm (5), exerting a force on the lever (8);
- a blocking system (14) for blocking the locking system, **characterized in that** the blocking system (14) comprises:
∘ a fixed part (15) mounted and blocked on the arm (5),
∘ a movable part (16) rotatably mounted on the fixed part (15) and provided with a blocking finger (21) extending towards the lever (8),
the movable part (16) being able to rotate between:
∘ an unblocking position in which the lever (8) is free to move between its upper and lower positions;
∘a blocking position in which the blocking finger (21) extends between the lever (8) in the upper position and the arm (5) so as to block the lever (8) from moving from its upper position to its lower position.

2. Load carrier (1) according to Claim 1, **characterized in that** it comprises blocking means (23) for blocking the movable part (16) from rotating with respect to the fixed part (15) when the movable part (16) is in the blocking position.

3. Load carrier (1) according to Claim 2, **characterized in that** the rotation blocking means (23) comprise:
- a first fixing element (24) secured to the movable part (16),
- a second fixing element (25) secured to a free end of the lever (8) or to the fixed part (15), the first (24) and second (25) fixing elements being located in the vicinity of one another when the movable part (16) is in the blocking position,
- a third fixing element for fixing the movable part (16) to the lever (8) or to the fixed part (15), which can secure the first (24) and second (25) fixing elements when the movable part (16) is in the blocking position.

4. Load carrier (1) according to Claim 3, **characterized in that** the first (24) and the second (25) fixing element are selected from a ring, a hole and a tongue provided with a hole or a ring and **in that** the third fixing element is selected from a padlock, a lock and a pin.

5. Load carrier (1) according to Claim 2, **characterized in that** the rotation blocking means (23) comprise:
- a first snap-fastening element secured to the movable part (16),
- a second snap-fastening element secured to a free end of the lever (8) or to the fixed part (15), the first and second snap-fastening elements being snap-fastened when the movable part (16) is in the blocking position.

6. Load carrier (1) according to any one of Claims 3 to 5, **characterized in that** the second fixing element (25) or the second snap-fastening element belongs to the lever (8).

7. Load carrier (1) according to any one of Claims 1 to 6, **characterized in that** a free end of the lever (8) comprises a tongue (22) forming an abutment extending along the blocking finger (21), against or in the immediate vicinity of the latter, when the movable part (16) is in the blocking position.

8. Load carrier (1) according to any one of Claims 1 to 7, **characterized in that** the movable part (16) is ring-shaped.

9. Load carrier (1) according to any one of Claims 1 to 8, **characterized in that** the periphery (19) of the movable part comprises a plurality of impressions (20) for a better grip.

10. Motor vehicle comprising the load carrier (1) according to any one of the preceding claims and a sleeve (3) secured to an element (2) of the structure of the vehicle, the lever (8) being inserted inside the sleeve (3) and engaged therewith in the upper position.
